# EUROPEAN PATENT APPLICATION

(11) **EP 4 749 115 A1**
(43) Date of publication of application: **27.05.2026**
(21) Application number: 24214736.1
(22) Date of filing: 22.11.2024
(51) Int. Cl.: F02D 41/14, F02D 31/00, F02D 29/02, F02D 29/06, B63H 21/14, F02B 61/04

(54) **POWER CONTROL UNIT**

(71) Applicant: WinGD Ltd., 8400 Winterthur (CH)
(72) Inventor: Bendyk, Maciej, 8044 Zürich (CH); Styliaras, Nikolaos, 8048 Zürich (CH); Lucarelli, Marco, 8050 Zürich (CH)
(74) Representative: Hepp Wenger Ryffel AG

(57) **Abstract**

A power control unit (1) for a propulsion system (100) of a marine vessel comprising an internal combustion engine (4) and a shaft (2) with a shaft generator (5) is configured to provide a fuel command to the internal combustion engine (4) based on a slow component of a speed error of the shaft (2), i.e. the slow component of a deviation of the shaft speed from a speed setpoint. A generator power command is provided to the shaft generator (5) based on a fast component of the speed error of the shaft (2) as well as on an electrical grid state of an electrical grid that is electrically connected to the shaft generator (5). An energy buffer (7) is used for storing and releasing electrical power from and to the shaft generator (5) and to the electrical grid (8). Thus, a more stable engine control regime and the avoidance of an engine overload is easier to achieve.

## Description

The invention relates to a power control unit according to the generic term of claim 1, to a propulsion system with such a power control unit and to a method of controlling such a propulsion system.

The propulsion system preferably comprises an internal combustion engine like a large marine or ship engine or a stationary engine whose cylinders have an inner diameter of at least 200 mm. The engine preferably is a two-stroke engine or a two-stroke cross-head engine. The engine can be a diesel or a gas engine, a dual fuel or a multi fuel engine. Burning of liquid and or gaseous fuels in such engines is possible as well as self-igniting or forced igniting.

The internal combustion engine can be a longitudinally scavenged two-stroke engine.

The term internal combustion engine also refers to large engines which can be operated not only in Diesel mode, which is characterized by the self-ignition of the fuel, but also in Otto mode, which is characterized by the forced ignition of the fuel, or in mixtures of the two. Furthermore, the term internal combustion engine includes in particular dual-fuel engines and large engines in which the self-ignition of the fuel is used for the forced ignition of another fuel. Forced ignition can be achieved by use of a pre-chamber, a spark plug and/or a pilot fuel.

Engine speed is preferably below 800 RPM, especially for 4-stroke engines, and more preferably below 200 RPM, especially for 2-stroke engines, which indicates the designation of low-speed engines.

Fuel can be Diesel or marine Diesel oils or heavy fuel oils or emulsions or slurries or methanol or ethanol as well as gases, like liquid natural gas (LNG), liquid petrol gas (LPG), natural gas (NG), petrol gas (PG) and so on.

Further possible fuels comprise: LBG (Liquefied Biogas), biological fuels (e. g. oil made from algae or seaweed), ammonia, hydrogen, and synthetic fuels from CO2 (e.g. made by Power-To-Gas or Power-To-Liquid).

Large ships, in particular vessels for transport of goods, usually are powered by internal combustion engines, in particular diesel and/or gas engines, mostly two-stroke, cross head engines.

Usually, two-stroke internal combustion engines for example used for propulsion of marine vessels are equipped with shaft generators.

The shaft generators are used for generating electricity to power different equipment on board, for example pumps, gas reliquification plants, reefer containers and general hotel load.

Typically, the shaft generator is coupled to an AC grid through a variable-frequency drive (VFD). According to DK202270114A1, a shaft generator control system is configured to allow the electrical power consumption to differ from the electrical power generation within a first period of at least 2 seconds to maintain the inherent stabilization of the system.

It is known to control internal combustion engines, in particular by fuel supply control systems, by automatically maintaining a given engine shaft rotation speed due to metered fuel supply.

However, shaft speed may vary due to varying external conditions, such as weather conditions or sudden changes in electrical load, which may result in a quickly varying fuel supply. This may lead to an overload of the engine and/or to an unstable regime of the system. Also, the inertia of the system might be too high such that the engine cannot follow such quickly varying fuel supply commands.

It is therefore an objective of the invention to provide a power control unit, a propulsion system, and a method for controlling a propulsion system which at least in part avoid the disadvantages of prior art solutions and which provide for a more stable engine control regime and a reduction of a risk of engine overload.

According to a first aspect of the invention, the objective is achieved by a power control unit for a propulsion system comprising an internal combustion engine and a shaft for transferring a propulsion force from the engine.

The propulsion system preferably is a propulsion system for a marine vessel. The internal combustion engine preferably is a large vessel engine with at least one cylinder having an inner diameter of at least 200 mm, preferably a two-stroke engine and/or a two-stroke cross head engine.

The power control unit is configured to provide an engine power command for the internal combustion engine based on a state of the shaft.

Within this application, the state of the shaft describes a dynamic property of the shaft, such as the velocity of the propeller, the rotational speed of the shaft, typically given in revolutions per minute, the rotational frequency, or the torque.

According to the invention, the power control unit comprises a discriminator such as a filter or an FFT-based discriminator which is configured to derive a fast component and a slow component from the state of the shaft.

Within this application, preferably shaft state oscillations with any period up to 25 seconds can be regarded as "fast" and any period above 25 seconds can be regarded as "slow".

A time dependent signal corresponding to the shaft state may be routed via a low-pass filter and/or a high pass filter to obtain the slow and/or the fast component, respectively.

Slow components correspond slowly changing parts of the shaft state that occur at low frequencies and fast components are associated with higher frequencies.

The slow component may depend on adjustable parameters of the internal combustion engines, such as the load, the amount of fuel, the type of the fuel, the amount of recirculated exhaust gas, or on slowly varying influencing factors, such as environmental temperature, environmental pressure, general wind direction, or oceanic currents.

Fast components may be dependent on fast changing factors, such as sea waves.

For control loops, it may be advantageous to differ between fast and slow components depending on the control variable.

The discriminator preferably is a frequency discriminator, which is able to separate shaft state parts in a range below or equal a predetermined first frequency from shaft state parts in a range above a predetermined second frequency. The predetermined first frequency may be equal to the predetermined second frequency. The discriminator may comprise a frequency filter implemented in a respective software component and may use fast Fourier transformation (FFT).

The power control unit may be configured to receive and/or store the first and/or the second predetermined frequency. The first and/or second predetermined frequency preferably is advantageously in a range of a frequency of a typical sea wave or a few times higher than the frequency of a typical sea wave, in particular in a range from 0.05 Hz to 0.1 Hz.

The first and/or second predetermined frequency may be determined during a shop trial or a sea trial. It may depend on the type of fuel and/or on the load and/or on the kind of engine and/or on the kind of propeller.

The power control unit may be part of the engine control system and/or the drive control system and/or may be adapted to receive input from other parts of the combustion engine and to take into account this input for providing an engine power command.

The power control unit preferably is configured to receive shaft state data indicative of the state of the shaft.

The shaft state data may be indicative of a speed of the shaft and/or of a torque of the shaft.

The shaft state data may be represented by a first sensor signal provided by a first sensor. The sensor may be a speed sensor, for example a revolution counter, or a torque sensor arranged for measuring speed and/or torque of the shaft.

Generally, a torque variation impacts the rotational speed of the shaft. The shaft speed may be used as a reference signal.

The use of the torque regulation is less preferable since the torque measurement method is not very accurate while the shaft speed measurement methods are very accurate. In particular, the speed of the shaft can be measured very precisely.

The engine power command may comprise a fuel command for the internal combustion engine.

A fuel command may set an amount of fuel, e.g., Diesel, heavy fuel oil, LNG, methanol, or ammonia that is to be injected into the engine via a fuel supply system.

The fuel command is typically provided in dependence of the shaft speed and/or the shaft torque and/or a shaft speed setpoint, stored in the power control unit and/or received by the power control unit.

If the actual shaft speed differs from the shaft speed setpoint, the amount of fuel may be increased or decreased, depending on whether the speed is too high or too low. High-frequency changes of the shaft speed may destabilize the control loop.

According to the invention, preferably the fuel command is provided in dependence of the slow component, whereas the fast components are not taken into account. This is meant by the term "solely based on the slow component" (see below).

Alternatively or additionally, the engine power command may comprise a command for setting a variable compression ratio, an exhaust recirculation rate and/or a an ignition timing.

Preferably, the engine power command, in particular the fuel command, is provided in dependence of the slow component of the state of the shaft, and in particular wherein the engine power command is solely based on the slow component of the state of the shaft. Within this context "solely based on the slow component" means that the fuel command is not based on the fast component.

The engine power command, in particular the fuel command, may be provided in dependence of a slow component, wherein the frequency is below a first predetermined limit value.

The provision of the engine power command in dependence on the slow component may establish a control loop for providing a more stable and/or at least more slowly varying fuel supply.

When fast components of the shaft speed are taken into account for providing the fuel command which are related to a frequency above a predetermined frequency, there is the risk that at least for a short time, the fuel command exceeds a maximum permissible load, which shall be avoided.

Differentiating between fast and slow components can therefore help keep the engine running within its operating limits and/or in a more preferred regime of fuel efficiency, exhaust emission values, engine wear, etc.. This can help to improve both the economic and the environmental efficiency of the engine.

Taking into account only slow components of the shaft state, for example the shaft speed, for providing the fuel command may result in a reduced fuel consumptions as excessive fuel peaks for transient effects are avoided.

Additionally, Lambda (air-fuel ratio) drops may be avoided.

By responding only to slower components, fuel can be saved.

The predetermined first frequency and the predetermined second frequency may depend on the fuel type and on the compression ratio.

For example, for an engine with VCR having a low compression ratio, speed oscillations may have a smaller impact on fuel consumption. Hence the discrimination does not need to react on small power variations and overloads.

If, however, a high compression ratio is used, the discrimination needs a faster response tuning.

A small overload margin can be compensated by a battery operating as a buffer and providing an additional margin. An optimal compression ratio can be maintained more easily and if additional power is needed for propulsion, the battery can be used to temporarily bridge power requirements (see below).

The propulsion system may further comprise a shaft generator connected to the shaft for receiving mechanical power from the shaft and/or for providing mechanical power to the shaft.

For these propulsions systems, the power control unit may be configured to provide a generator power command for the shaft generator indicative of the mechanical power that is to be received from the shaft and/or provided to the shaft by means of the shaft generator. Thus, the mechanical power takeout and/or supply can be controlled by the power control unit.

The generator power command may be based on the fast component of the state of the shaft, in particular solely on the fast component of the state of the shaft. Within this context "based solely on the fast component" means "not depending on the slow component".

The shaft generator is thus able to respond more instantly to control commands. It is therefore less prone to instability in case of quick changes. Further, as the shaft generator is typically electrically driven, power can be delivered almost instantaneously.

The generator power command may be provided in dependence of a fast component, wherein the frequency is above a second predetermined limit value.

The second predetermined limit value may be the same or different as the first predetermined limit value.

In general, the external torque applied to the shaft can be a variable propeller torque, caused by a propulsion torque, rudder movements or sea wave load, and shaft generator torque related to a variable electrical load.

A generator power command causing a variation of the electrical load depending on the fast component may have an impact on the state of the shaft, in particular on the fast component, and may give basis for a closed control loop resulting in a more stable fast component and/or minimized fast oscillations.

The generator power command may be based on the fast component of the shaft speed. Generally, the shaft generator electrical load can be controlled directly by torque, in particular by the fast component.

The power control unit may be configured to receive electrical state data indicative of an electrical grid state of an electrical grid that is electrically connected to the shaft generator, for example a power requirement. The power control unit is configured to provide the generator power command and/or the engine power command in dependence on the received electrical state data.

The electrical grid state may comprise data concerning electrical voltages, electrical currents, electrical loads, electrical frequencies, and electrical power of the electrical grid or a part or parts thereof.

The electrical grid may comprise electrical consumers and/or additional generators driven, e.g., by auxiliary engines.

In particular, the electrical grid may comprise an electrical buffer. The generator power command may be related to a power requirement of the electrical consumers and/or the power requirement or the capacity of the electrical buffer.

Not only the shaft state but also the electrical grid state may be taken into account for providing the generator power command and/or the engine power command. In particular, when the electrical grid needs more energy, a respective fuel command may be provided to the engine.

The shaft generator power command may set an appropriate electrical load corresponding to a required electrical consumption of the electrical grid on the ship.

The shaft generator power command may set an appropriate electrical load to be buffered in an electrical energy storage.

If needed, the power control unit may provide a fuel command depending on the electrical state data, for example in order to produce more energy to be released to the shaft generator and the electrical grid.

The electrical grid may comprise a regulator or electrical load control, which controls the electrical grid, in particular depending on the state of the electrical grid.

Data indicative of an electrical grid state of the electrical grid may also be provided to the regulator of the electrical grid.

The regulator may provide the data to the power control unit or the regulator may provide through the power control unit an engine control command, for example if more electrical energy is necessary for the electrical grid than provided by the shaft, or a generator power command, for example when more mechanical power is needed due to the fast component of the shaft state.

The power control unit may be configured to provide the engine power command and/or the generator power command based on a deviation of the state of the shaft from a setpoint, in particular based on a deviation of the speed of the shaft from a speed setpoint and/or a torque of the shaft from a torque setpoint. The setpoint may be stored in the power control unit and/or may be received by the power control unit.

The speed setpoint is a predetermined revolution/per minute on the propeller curve depending on the torque or load for determining the corresponding needed amount of fuel.

The power control unit may be configured to provide the engine power command and/or the generator power command based on a deviation of the fast component and/or the slow component of the state of the shaft from a respective setpoint.

The setpoint may be dependent on the specific engine layout and on an intended ship velocity as well as on an intended acceleration profile.

The relation between a deviation and a respective fuel command and/or a respective generator power command a may be predetermined and may be stored and/or received by the engine power control unit.

The setpoints as well as allowable deviations may be determined in shop trial or they may be provided to the vessel via remote configuration, e.g., via satellite data links.

The objective of the invention is, according to a second aspect of the invention, also achieved by a propulsion system comprising a power control unit according to the first aspect of the invention.

The propulsion system in particular is a propulsion system for a marine vessel.

The propulsion system comprises a power control unit as described above. The propulsion system further comprises an internal combustion engine, in particular a large vessel engine with at least one cylinder having an inner diameter of at least 200 mm, preferably a two-stroke engine and/or a two-stroke cross head engine.

The propulsion system comprises a shaft for transferring a propulsion force from the engine. The propulsion system further comprises a first sensor for providing shaft state data indicative of a state of the shaft, in particular of a speed of the shaft and/or of a torque of the shaft to the power control unit.

The power control unit is configured to provide an engine power command to the internal combustion engine, wherein the engine power command is in particular based on a slow component of the state of the shaft.

The propulsion system may further comprise a shaft generator connected to the shaft for receiving mechanical power from the shaft and/or for providing mechanical power to the shaft.

The power control unit may be configured to provide a generator power command to the shaft generator indicative of the mechanical power that is to be received from and/or provided to the shaft by means of the shaft generator, wherein the generator power command is in particular based on a fast component of the state of the shaft.

The power control unit can be separated into an engine control unit and an electrical control unit but can also be one integrated controller. The power control unit may be part of the overall engine control unit.

The propulsion system may further comprise a second sensor for providing electrical state data indicative of an electrical grid state of an electrical grid that is electrically connected to the shaft generator to the power control unit.

The generator power command and/or the engine power command may be based on the electrical state data, for example the demand for electrical energy by the electrical consumers on the ship.

The propulsion system further may comprise an energy buffer, for example a battery, that is electrically connected to the shaft generator and/or to the electrical grid, which is configured for storing and releasing electrical energy. Thus, power can be received from the shaft and stored in the energy buffer and/or taken from the energy buffer and provided to the shaft or to the electrical consumers.

Said electrical state data may include buffer data being indicative of a state of said energy buffer such as a charging level, such that the power control unit may take into account the buffer data for providing the generator power command and/or the engine power command.

The generator power command may provide for taking away generator power from the shaft and to transfer it to the electrical grid and/or to be buffered in the energy buffer and/or
to provide electrical energy from the energy buffer and to transfer it to mechanical energy to be supplied to the shaft. Thus, power requirements are easier to fulfil which can help to stabilize the system.

The electrical grid of the propulsion system may comprise a regulator or electrical load control, which may be adapted to distribute electrical power to the consumers, the energy buffer and the shaft. The regulator may be adapted to provide commands for serving the grid and/or the energy buffer depending on the need of power consumption on the ship and the power-input or power-output requirements of the shaft.

For normal operation, the average electrical power provided by the shaft generator should be equal to the power needed by the grid. Transients may be covered by the energy buffer.

The energy buffer may be any battery, preferably a high-power battery such as a lithium-nickel-cobalt-manganese-oxide (NMC) or lithium-titanate or lithium-titanium-oxide (LTO) battery.

The power capability of the energy buffer should be in a range of at least 1% of the maximum internal combustion engine power. Repetitive short charge/discharge cycles should have an insignificant impact on the life cycle. As mentioned, NMC and LTO are valid solution. Lithium ferrophosphate (LFP) batteries can also be used, but with higher capacity as discharge/charge currents for such batteries are lower.

The propulsion system may comprise a power control unit which may be configured to provide the generator power command and/or the engine power command based on a deviation of the state of the shaft from a setpoint, in particular from the fast and/or slow component of the state of the shaft.

According to a third aspect of the invention, the objective is also achieved by a method for controlling a propulsion system, preferably as described above with regard to the second aspect of the invention, in particular of a marine vessel.

The propulsion system comprises an internal combustion engine, in particular a large vessel engine with at least one cylinder having an inner diameter of at least 200 mm, preferably a two-stroke engine and/or a two-stroke cross head engine.

The propulsion system further comprises a shaft for transferring a propulsion force from the engine. The method comprises the following steps.

Shaft state data indicative of a state of the shaft, in particular indicative of a speed of the shaft and/or of a torque of the shaft, is provided. The shaft data may be derived from a signal of a first sensor, preferably as described above, and may be received by a power control unit, preferably as described above, of the propulsion system.

A fast component and a slow component are derived from the state of the shaft.

The fast and the slow component are derived by a discriminator, having software- and/or hardware-components.

The electronic signal of the first sensor may be filtered by electronic high-pass and/or low-pass filters, and/or the electronic sensor signal may be digitized and filtered by software, e.g. based on an FFT analysis.

Then, an engine power command is provided to the internal combustion engine, preferably a fuel command, based on the state of the shaft, in particular based on the slow component of the state of the shaft.

A control of the combustion engine on the basis of the slow components of the state of the shaft helps to keep the system within its operation limits.

The propulsion system may further comprise a shaft generator connected to the shaft for receiving mechanical power from the shaft and/or for providing mechanical power to the shaft. When receiving mechanical power from the shaft and generating electrical energy therefrom, the shaft generator acts as a "generator". When receiving electrical energy and providing mechanical power to the shaft, the shaft generator acts as an electric motor. Both functionalities shall be comprised by the term "shaft generator" herein.

The method may comprise the step of providing a generator power command to the shaft generator that is indicative of the mechanical power that is to be received from and/or provided to the shaft, in particular based on the fast component of the state of the shaft.

Whereas the slow component may be used for the control loop of the internal combustion engine operation, fast components of the state of the shaft may be compensated by the electrical grid. Taken together, this leads to a more stable shaft state and engine operation.

Electrical state data indicative of an electrical grid state of an electrical grid that is electrically connected to the shaft generator may be provided, for example by a regulator of the electrical grid. Said generator power command and/or the engine power command may then be based on the electrical grid state.

The electrical grid state may be characterized by a power consumption of an external electrical grid and/or an intake and/or delivery capacity of an energy buffer.

In a further step, by means of the shaft generator, power from the shaft may be stored in an energy buffer, in particular depending on the fast component of the state of the shaft and preferably depending on an electrical grid state of the electrical grid that is electrically connected to the shaft generator.

Additionally or alternatively, by means of the shaft generator, power from the energy buffer may be supplied to the shaft, in particular depending on the fast component of the state of the shaft and preferably depending on an electrical grid state of the electrical grid, that is electrically connected to the shaft generator.

When the fast component leads to a shaft generator power that is higher than the vessel electrical demand, then the additional power may be supplied to the energy buffer.

When the fast component leads to a shaft generator power that is lower than the electrical demand of the grid, the energy buffer may supply the missing load.

If the shaft speed drops or the torque requirements increases, the shaft generator power should be decreased, such that no energy is discharged from the shaft which would be necessary for the vessel's propulsion. As an alternative or in addition, power can be provided to the shaft by means of the shaft generator acting as electric motor.

The energy power provided by the electric buffer can then be increased such that the energy storage provides the missing power.

If the shaft speed increases or if the torque is reduced, the shaft generator power may be increased, and the energy storage may capture the power surplus.

A setpoint may be provided for the state of the shaft, in particular a speed setpoint and/or a torque setpoint.

The engine power command and/or the generator power command may be provided based on a deviation of the state of the shaft from the setpoint, in particular based on a deviation of the speed of the shaft from a speed setpoint. This makes it easier to keep the propulsion system in its ideal operational limits.

According to another aspect of the invention, the objective is also achieved by a marine vessel comprising a propulsion system as described above and preferably an electrical grid.

According to yet another aspect of the invention, the objective is also achieved by a computer program product comprising instructions to cause a power control unit as described above with regard to the first aspect of the invention or a propulsion system as described above with regard to the second aspect of the invention to execute the steps of a method as described above with regard to the third aspect of the invention.

The computer program product may be stored on a computer-readable medium.

Further advantageous aspects of the invention are explained in the following by means of exemplary embodiments and the figures.

Functionally equal elements are provided with the same reference signs. In the drawings, in a schematic manner:
- Figure 1: shows a diagram for a propulsion system according to the state of the art;
- Figure 2: shows a diagram for a propulsion system according to the invention;
- Figure 3: shows a course of a shaft speed set point over time;
- Figure 4a: shows an exemplary course of a shaft speed error over time;
- Figure 4b: shows an exemplary course of a fuel command according to the state of the art resulting from a shaft speed error as shown in Figure 4a;
- Figure 5a: shows an exemplary course of a shaft speed error over time;
- Figure 5b: shows an exemplary course of a fuel command according to the invention resulting from a shaft speed error as shown in Figure 5a.

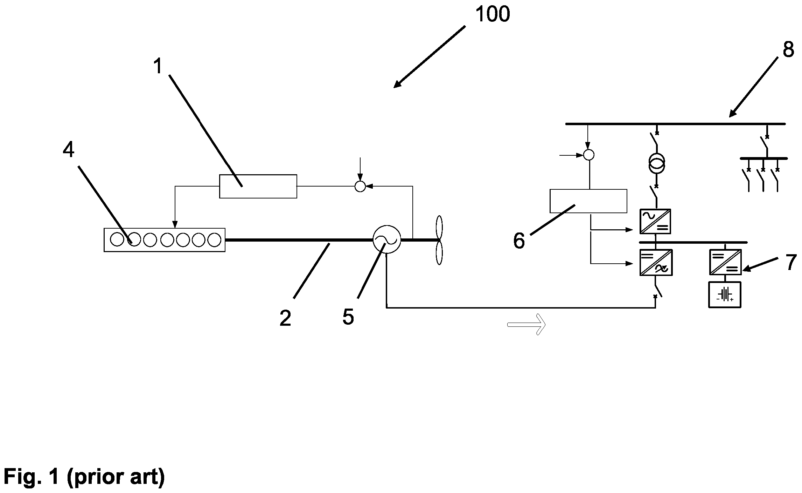

Figure 1 shows a schematical diagram for a propulsion system 100 according to the state of the art.

The propulsion system 100 comprises an internal combustion engine 4 and a shaft 2 for transferring a propulsion force from the engine 4.

A power control unit 1 is configured to provide an engine power command for the internal combustion engine 4 based on a state of the shaft 2. For example, the speed of the shaft is measured and if the measured speed is out of a tolerance interval with respect to a predetermined shaft speed, more or less fuel is injected into the internal combustion engine 4 depending on whether the speed is too low or too high.

Additionally, a shaft generator 5 is connected to the shaft 2 for receiving mechanical power from the shaft 2 and for providing electrical power to an electrical grid 8. Thus, a part of the shaft energy is branched off to power the electrical grid 8.

Th electrical grid 8 may comprise consumers (not explicitly shown in the figure) and an energy buffer 7, in particular a battery.

The electrical grid 8 comprises a regulator 6 which distributes the electrical power provided by the shaft generator 5, depending on the state of the electrical grid 8 to the consumers and the battery 7. If the consumers for example do not need any energy, the battery may be charged. If the consumers need more energy than provided by the shaft generator 5, energy may be taken from the battery 7.

According to the state of the art, the fuel control and the control of the electrical grid are independent from each other.

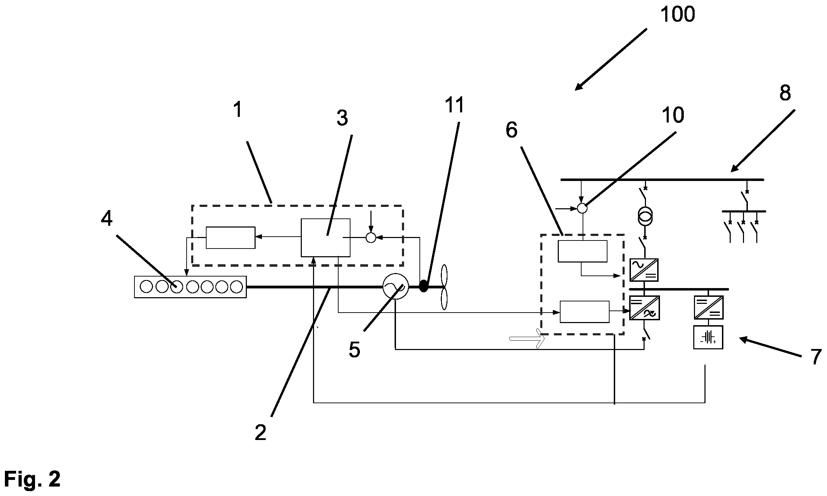

Figure 2 shows a schematical diagram for a propulsion system 100 according to the invention.

The propulsion system 100 comprises an internal combustion engine 4 and a shaft 2 for transferring a propulsion force from the engine 4. A power control unit 1 is configured to provide an engine power command comprising a fuel command for the internal combustion engine 4 based on a state of the shaft 2, specifically based on a slow component of the shaft speed error (i.e. deviation from a speed setpoint).

According to the invention, the power control unit 1 comprises a discriminator 3 which is configured to derive a fast component and a slow component from the state of the shaft 2. Only the slow component of the shaft state is used for determining the fuel command.

A shaft generator 5 is connected to the shaft 2 for receiving mechanical power from the shaft 2 and for providing electrical power to an electrical grid 8, as well as if necessary for receiving electrical power form the electrical grid 8 and for providing mechanical power to the shaft 2.

The shaft generator 5 can thus be considered as a two-direction interface between the shaft 2 and the electrical grid 8.

Th electrical grid 8 comprises consumers (not shown in the fig- ure) and a battery acting as an energy buffer 7.

The electrical grid 8 comprises a regulator 6, which on the one hand distributes the electrical power provided by the shaft generator 5, depending on the state of the electrical grid 8 to the consumers and the battery 7.

On the other hand, the regulator 6 is connected to the power control unit 1 for receiving a generator power command.

Depending on the state of the electrical grid 8 and the generator power command, when the electrical energy provided by the shaft generator 5 is not sufficient for the electrical grid 8, the regulator 6 may provide a fuel command to the control unit 1 to increase the engine power.

The power control unit 1 is configured to provide a generator power command for the shaft generator 5 which is indicative of the mechanical power that is to be received from the shaft 2 and/or provided to the shaft 2 by means of the shaft generator 5.

The generator power command is solely based on the fast component of the state of the shaft 5.

Thus, fast changes of the shaft speed may be responded not by a change in the amount of fuel to be injected into the engine 4 but by a change of mechanical energy absorbed or provided by the shaft generator 5.

The propulsion system 100 comprises a first sensor 11, specifically a shaft speed sensor providing shaft state data to the control unit 1.

The electrical grid 8 comprises a second sensor 10 for providing electrical state data to the regulator 6.

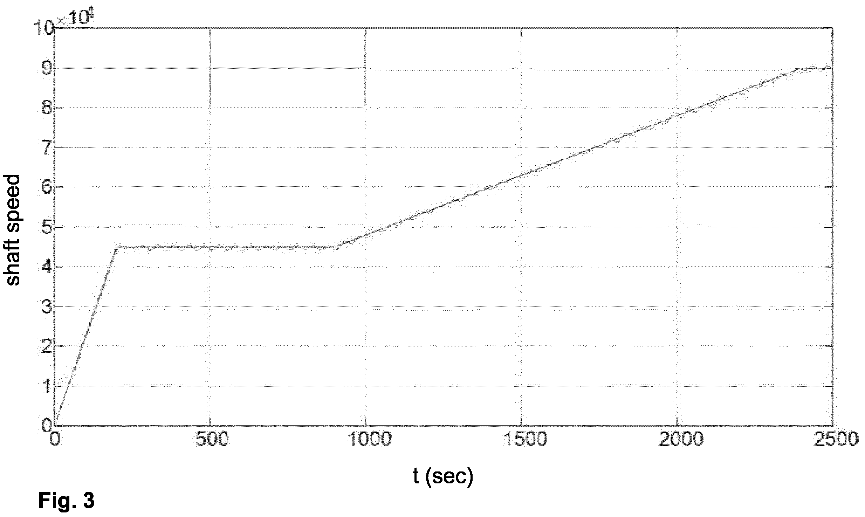

Figure 3 shows an example of a course of a shaft speed setpoint (straight line) as well as a shaft speed (oscillating line) over time.

The intended shaft speed may be increased at the beginning, then held at a constant before it is further increased, but at a less steep slope.

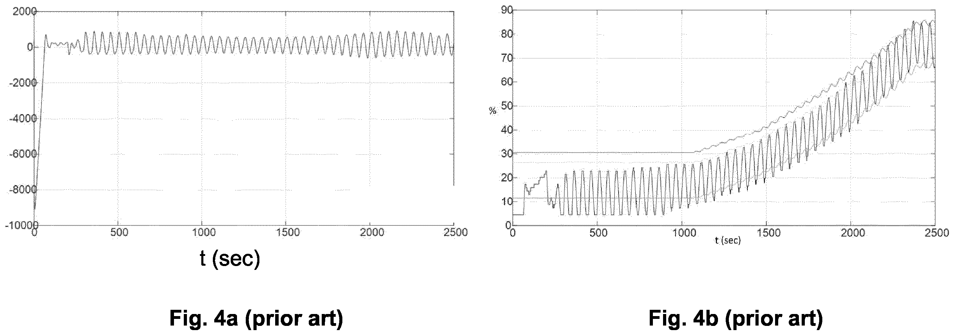

Figure 4a shows an exemplary course of a shaft speed error according to the state of the art.

In this case, the shaft speed error has a fast-varying component oscillations) for example due to sea waves.

The fuel command typically tries to follow this behaviour as it is shown in figure 4b. However, the system may not succeed in catching up due to the inertia of the system.

Figure 4b shows an exemplary course of a fuel command according to the state of the art resulting from a shaft speed error as shown in Figure 4a. As a result of the fast-varying shaft speed error, the fuel command oscillates and may go beyond load limits of the system.

The oscillations of the fuel command may even provide for amplification of the shaft speed oscillations, which can further deteriorate the situation.

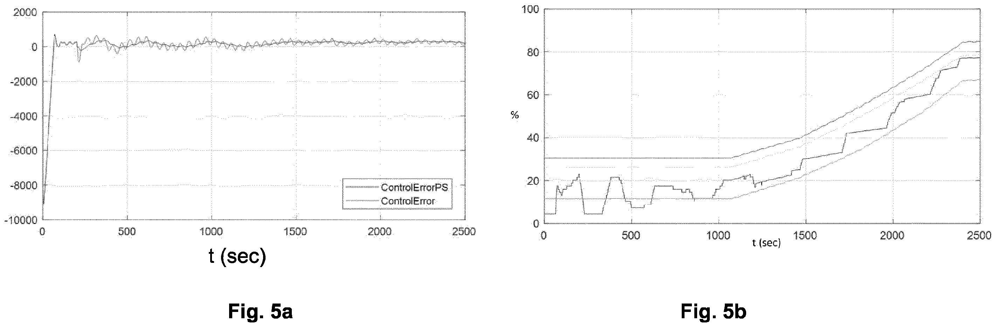

Figure 5a shows an exemplary course of a shaft speed error over time in a propulsion device according to the invention.

Within this figure, the curve named ControlError comprises fast oscillations and relates to the shaft speed error while the curve named ControlErrorPS is smoother and relates to the slow component of the shaft speed error only.

Also in this example, the shaft speed error varies rapidly due to sea waves as can be seen in the ControlError curve with fast oscillations.

However, as the fuel command for the engine 4 (see figure 2) only responds to the slow components of the shaft speed error (i.e. the ControlErrorPS curve) rather than also the fast component thereof, the system can be controlled in a much smoother way, which can be seen in Figure 5b.

Figure 5b shows an exemplary course of a fuel command according to the invention resulting from the slow component (i.e. the ControlErrorPS curve) of the shaft speed error as shown in Fig- ure 5a.

As only the slow component of the shaft speed is taken into account for setting the fuel command, the fuel command does not oscillate fast and in a smaller range. This helps to keep the fuel command mostly between the limits as denoted by the upper and lower bandwidth lines.

The frequency limit to distinguish between the fast and the slow components is preferably set such that the fuel consumption is minimized along the shaft speed setpoint over time.

## Claims

1. A power control unit (1) for a propulsion system (100) comprising an internal combustion engine (4) and a shaft (2) for transferring a propulsion force from the internal combustion engine (4),
wherein the power control unit (1) is configured to provide an engine power command for the internal combustion engine (4) based on a state of the shaft (2), and
wherein the power control unit (1) comprises a discriminator (3) which is configured to derive a fast component and a slow component from the state of the shaft (2).

2. The power control unit (1) according to claim 1 configured to receive shaft state data indicative of the state of the shaft (2), and in particular wherein the shaft state data is indicative of a speed of the shaft (2) and/or of a torque of the shaft (2).

3. The power control unit (1) according to any one of the preceding claims, wherein the engine power command comprises a fuel command for the internal combustion engine (4).

4. The power control unit (1) according to any one of the preceding claims configured to provide the engine power command based on the slow component of the state of the shaft (2), and in particular wherein the engine power command is solely based on the slow component of the state of the shaft (2).

5. The power control unit (1) according to any one of the preceding claims, wherein the propulsion system (100) further comprises a shaft generator (5) connected to the shaft (2) for receiving mechanical power from the shaft (2) and/or for providing mechanical power to the shaft (2), and wherein the power control unit (1) is configured
- to provide a generator power command for the shaft generator (5) indicative of the mechanical power that is to be received from the shaft (2) and/or provided to the shaft (2) by means of the shaft generator (5),
and in particular wherein the generator power command is based on the fast component of the state of the shaft (2), in particular solely on the fast component of the state of the shaft (5).

6. The power control unit (1) according to claim 5 configured to receive electrical state data indicative of an electrical grid state of an electrical grid that is electrically connected to the shaft generator (5), and
wherein the power control unit (1) is configured to provide the generator power command and/or the engine power command based on the received electrical state data.

7. The power control unit (1) according to any one of the preceding claims configured to provide the engine power command and/or the generator power command based on a deviation of the state of the shaft (2) from a setpoint, in particular based on a deviation of the speed of the shaft (2) from a speed setpoint.

8. A propulsion system (100), in particular for a marine vessel, comprising a power control unit (1) according to any one of the preceding claims and further comprising
- an internal combustion engine (4), in particular a large vessel engine with at least one cylinder having an inner diameter of at least 200 mm, preferably a two-stroke engine and/or a two-stroke cross head engine,
- a shaft (2) for transferring a propulsion force from the engine (4), and
- a first sensor (11) for providing to the power control unit (1) shaft state data indicative of a state of the shaft, in particular of a speed of the shaft (2) and/or of a torque of the shaft (2),
wherein the power control unit (1) comprises a discriminator (3) which is configured to derive a fast component and a slow component from the state of the shaft (2) and
wherein the power control unit (1) is configured to provide an engine power command to the internal combustion engine (4) based on a state of the shaft (2), and
wherein the engine power command is in particular based on the slow component of the state of the shaft (2).

9. The propulsion system (100) according to claim 8 further comprising
- a shaft generator (5) connected to the shaft (2) for receiving mechanical power from the shaft (2) and/or for providing mechanical power to the shaft (2),
wherein the power control unit (1) is configured to provide a generator power command to the shaft generator (5) indicative of the mechanical power that is to be received from and/or provided to the shaft (2) by means of the shaft generator (5), and
wherein the generator power command is in particular based on a fast component of the state of the shaft (2).

10. The propulsion system (100) according to claim 9 further comprising a second sensor (10) for providing to the power control unit (1) electrical state data indicative of an electrical grid state of an electrical grid (8) that is electrically connected to the shaft generator (5), and wherein the generator power command and/or the engine power command is based on the electrical state data.

11. The propulsion system (100) according to claim 10 further comprising an energy buffer (7) electrically connected to the shaft generator (5) and/or to the electrical grid (8) and configured for storing and releasing electrical energy and,
wherein said electrical state data includes buffer data indicative of a state of said energy buffer (7), and wherein the power control unit (1) is configured to take into account the buffer data for providing the generator power command and/or the engine power command.

12. The propulsion system (100) according to any one of the claims 8 to 11 wherein the power control unit (1) is configured to provide the generator power command and/or the engine power command based on a deviation of the state of the shaft (2) from a setpoint, in particular based on a deviation of the speed of the shaft (2) from a speed setpoint and/or on a deviation of the torque of the shaft (2) from a torque setpoint.

13. A method for controlling a propulsion system (100), in particular for a marine vessel, preferably according to any one of the claims 8 to 12, comprising an internal combustion engine (4), in particular a large vessel engine with at least one cylinder having an inner diameter of at least 200 mm, preferably a two-stroke engine and/or a two-stroke cross head engine, and a shaft (2) for transferring a propulsion force from the engine (4), the method comprising steps of:
- providing shaft state data indicative of a state of the shaft, in particular indicative of a speed of the shaft (2) and/or of a torque of the shaft (2),
- deriving a fast component and a slow component from the state of the shaft (2), and
- providing an engine power command to the internal combustion engine (4), preferably a fuel command, based the state of the shaft (2), in particular based on the slow component of the state of the shaft (2).

14. The method according to claim 13, wherein the propulsion system (100) further comprises a shaft generator (5) connected to the shaft (2) for receiving mechanical power from the shaft (2) and/or for providing mechanical power to the shaft (2), the method comprising a step of:
- providing a generator power command to the shaft generator (5) indicative of the mechanical power that is to be received from and/or provided to the shaft (2), in particular based on the fast component of the state of the shaft (2).

15. The method according to claim 14 comprising a step of:
- providing electrical state data indicative of an electrical grid state of an electrical grid that is electrically connected to the shaft generator (5), and
wherein said generator power command and/or the engine power command is based on the electrical grid state.

16. The method according to any one of the claims 14 or 15 comprising a step of:
- by means of the shaft generator (5) storing power from the shaft (2) in an energy buffer (7),
and/or a step of:
- by means of the shaft generator (5) supplying power from the energy buffer (7) to the shaft (2),
in particular depending on the fast component of the state of the shaft (2) and/or depending on an electrical grid state of the electrical grid (8) that is electrically connected to the shaft generator (5).

17. The method according to any one of the claims 13 to 16 comprising steps of:
- providing a setpoint for the state of the shaft (2), in particular a speed setpoint, and
- providing the engine power command and/or the generator power command based on a deviation of the state of the shaft (2) from the setpoint, in particular based on a deviation of the speed of the shaft (2) from a speed setpoint.
